(19) Europäisches Patentamt
European Patent Office
Office européen des brevets

(11) EP 2 773 005 B1

(12) **EUROPEAN PATENT SPECIFICATION**

(45) Date of publication and mention of the grant of the patent:
**23.05.2018 Bulletin 2018/21**

(51) Int Cl.:
***G06F 17/11*** (2006.01) ***H02J 3/06*** (2006.01)

(21) Application number: **14156701.6**

(22) Date of filing: **26.02.2014**

(54) **Method for Optimizing a Power Flow in an Electric Power Network**

Verfahren zur Optimierung eines Stromflusses in einem Stromversorgungsnetz

Procédé d'optimisation de flux de puissance dans un réseau d'alimentation électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2013 US 201313779206**

(43) Date of publication of application:
**03.09.2014 Bulletin 2014/36**

(73) Proprietor: **Mitsubishi Electric Corporation
Chiyoda-ku
Tokyo 100-8310 (JP)**

(72) Inventors:
- **Raghunathan, Arvind U.
Brookline, MA Massachusetts 02445 (US)**
- **Gopalakrishnan, Ajit
Pittsburgh, PA Pennsylvania 15217 (US)**
- **Nikovski, Daniel N.
Brookline, MA Massachusetts 02446 (US)**

(74) Representative: **Pfenning, Meinig & Partner mbB
Patent- und Rechtsanwälte
Theresienhöhe 11a
80339 München (DE)**

(56) References cited:
- **GOPALAKRISHNAN A ET AL: "Global optimization of Optimal Power Flow using a branch & bound algorithm", 2012 50TH ANNUAL ALLERTON CONFERENCE ON COMMUNICATION, CONTROL, AND COMPUTING, 1-5 OCTOBER 2012, ALLERTON HOUSE, UIUC, ILLINOIS, USA, 1 October 2012 (2012-10-01), pages 609-616, XP032345053, DOI: 10.1109/ALLERTON.2012.6483274 ISBN: 978-1-4673-4537-8**
- **WARRINGTON J ET AL: "A market mechanism for solving multi-period optimal power flow exactly on AC networks with mixed participants", 2012 AMERICAN CONTROL CONFERENCE (ACC 2012), 27-29 JUNE 2012, MONTREAL, CANADA, 27 June 2012 (2012-06-27), pages 3101-3107, XP032244911, ISBN: 978-1-4577-1095-7**
- **GAYME D ET AL: "Optimal power flow with distributed energy storage dynamics", 2011 AMERICAN CONTROL CONFERENCE (ACC 2011), 29 JUNE - 1 JULY 2011, SAN FRANCISCO, CA, USA, 29 June 2011 (2011-06-29), pages 1536-1542, XP032035180, ISBN: 978-1-4577-0080-4**
- **RONG A ET AL: "An efficient envelope-based Branch and Bound algorithm for non-convex combined heat and power production planning", EUROPEAN JOURNAL OF OPERATIONAL RESEARCH, vol. 183, no. 1, 16 November 2007 (2007-11-16), pages 412-431, XP025318388, ISSN: 0377-2217, DOI: 10.1016/J.EJOR.2006.09.072 [retrieved on 2007-05-25]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GOPALAKRISHNAN A ET AL: "Global optimization of multi-period optimal power flow", 2013 AMERICAN CONTROL CONFERENCE (ACC), 17-19 JUNE 2013, WASHINGTON, DC, USA, 17 June 2013 (2013-06-17), pages 1157-1164, XP032475910, ISSN: 0743-1619 ISBN: 978-1-4799-0177-7 [retrieved on 2013-08-14]
- PANCIATICI P ET AL: "Advanced optimization methods for power systems", 2014 POWER SYSTEMS COMPUTATION CONFERENCE, 18-22 AUGUST 2014, 18 August 2014 (2014-08-18), pages 1-18, XP055199994, DOI: 10.1109/PSCC.2014.7038504 ISBN: 978-8-39-358013-2

## Description

### Field of the Invention

The present invention relates generally to electric power networks, and more particularly to optimizing power flows in the networks including energy storage devices.

### Background of the Invention

An electric power network includes buses connected to transmission lines. The buses are locally connected to generators and loads. Optimal power flow (OPF) analysis is often used for monitoring and controlling the operation of the network. The power flow depends, in part, on voltage magnitudes and phase angles. Power flows and voltage levels on the buses are optimized by minimizing an objective function subject to constraints, such as the magnitudes, phases, power transferred, generator capacity, thermal losses, and the like.

Most conventional OPF optimizations:

- Use simplifying assumptions, such as small differences between phase angles at buses, to reduce quadratic equalities and inequalities to linear equalities and inequalities. However, such assumptions may not be valid for all networks.
- Use nonlinear programming (NLP) to determine a lowest cost per kilowatt hour delivered. However, NLP cannot guarantee the globally optimal voltages and generator levels for efficient operation.
- Use a relaxation of OPF to convex optimization, such as second-order cone programming (SOCP). However, such relaxed convex optimizations do not guarantee feasible solutions with a global minimum for the original problem.
- Use a relaxation of OPF to semi-definite programming (SDP), which requires changing resistances of lossless lines in the network, restrictions on the network topology or constraints, or requires modification of the network to ensure global optimality.
- Use a branch and bound (BB) procedure with Lagrangian duality (LD) based lower bounds that do not consider all possible necessary constraints and are considerably slow due to the irregular nature of the optimization problem.
- Do not consider that the amount of energy that is stored, charged, or discharged in batteries at any time is critically dependent on the amount that is actually charged or discharged from the batteries at the that time.
- Do not consider time dependent changes for equipment, such as step voltage regulators, voltage transformers or capacitor banks that are used. These devices are typically expensive and frequent changes in their operations can lead to quick degradation of the equipment and eventually result in dramatic reduction in the life of the device.
- Do not consider time dependent changes when power drawn from generating equipment are subject to ramp limits.

Thus, there remains a need to globally optimize an electric power networks considering multiple time periods of optimization in an efficient and expedient manner.

U.S. Patent 6,625,520 describes a system and method for operating an electric power system that determines optimal power flow and available transfer capability of the electric power system based on the optimal power flow. The system derives data associated with an initial phase angle and maximum electric power value of a generator by determining mechanical output and electrical output of a generator, including a generator phase angle defined by a time function with a constraint condition that the generator phase angle does not exceed a preset value.

The paper "Global optimization of Optimal Power Flow using a branch & bound algorithm" (A. Gopalakrishnan et al, "50th Annual Allerton Conference on Communication, Control, and Computing", Monticello, IL, USA, 1-5 Oct. 2012) proposes two algorithms for the solution of the Optimal Power Flow (OPF) problem to global optimality. The algorithms are based on the spatial branch and bound framework with lower bounds on the optimal objective function value calculated by solving either the Lagrangian dual or the semidefinite programming (SDP) relaxation. This approach can solve to global optimality the general form of the OPF problem including: generation power bounds, apparent and real power line limits, voltage limits and thermal loss limits.

In "A market mechanism for solving multi-period optimal power flow exactly on AC networks with mixed participants" (J. Warrington et al, "American Control Conference (ACC), 2012". Montreal, QC, Canada, 27-29 June 2012), the authors address the problem of optimal power flow on AC networks via reformulation as a semidefinite program. The problem is extended to multiple time periods in order to accommodate the time-coupled nature of power system entities' costs and constraints. A market mechanism is then developed for the clearing of nodal prices for both real and reactive power, and it is shown that these prices are optimal under standard convexity assumptions. The mechanism is motivated by the separable structure of the Lagrangian associated with the relaxed SDP formulation, allowing the application of a dual subgradient method.

## Summary of the Invention

The invention is defined by a method for optimizing power flow in an electric power network with the steps in independent method claim 1.

The embodiments of the invention provide a method for globally optimizing a power flow in electric power networks during multiple time periods of operation. A spatial branch and bound (BB) procedure ensures that a globally optimal solution is attained. The BB procedure partitions the feasible region of the power flow problem, specifically by partitioning the bound on generation variables and also constraints on voltage magnitudes, which speeds up convergence. A lower bound on the optimal solution is determined by semi-definite programming (SDP), which provides a maximal lower bound. The SDP uses interior point procedures, which bound the computational complexity.

Specifically, power flow in an electric power network is optimized during multiple time periods of operation of the electric power network by solving an optimization problem represented by an objective function by first initializing variables and constraints of a branch and bound (BB) tree, wherein nodes in the BB tree represent feasible regions of the optimization problem.

Upper and lower bounds on the objective function are solved using the BB tree. A lowest lower bound and a lowest upper bound are updated. If difference between the lowest lower bound and the lowest upper bound is less than a threshold, the power flow is outputted based on the lowest lower bound and the lowest upper bound.

To accommodate large problems arising from several periods, a Lagrangian decomposition method is used to solve the lower bounding problem.

## Brief Description of the Drawings

Fig. 1 is a schematic of an electric power network and a graph representing the network that can be used by embodiments of the invention;

Fig. 2 is schematic of a branch and bound tree used by embodiments of the invention;

Fig. 3 is a graph of upper and lower bounds used by embodiments of the invention;

Fig. 4 is a graph of optimized bounds according to embodiments of the invention;

Fig. 5 is a schematic of a rectangular partitioning according to embodiments of the invention;

Fig. 6 is a schematic of a radial partitioning according to embodiments of the invention;

Fig. 7 is a flow diagram of a method according to embodiments of the invention; and

Fig. 8 is a block diagram of matrices used by embodiments of the invention.

## Detailed Description of the preferred embodiments

### Electrical power network topology and representative graph

Fig. 1 shows a topology of an electric power network that can use embodiments of the invention. The network can include AC components, and DC components connected by convertors. The only requirement is that variables and constraints that control the operation of the network are continuously controllable.

The network includes buses 10 locally connected to loads (L) 12 and generators (G) 14. Additionally, buses are also locally connected to storage devices (B) 15 such as batteries. The buses are interconnected by transmission lines 20. Some of the transmission lines can be connected to transformers (T) 22.

The generators supply active power (measured in, e.g., Mega Watts (MW)), and reactive power (measured in Mega Volt Ampere Reactive (MVar)). The loads consume the power. The power is defined by voltage magnitude and phase angle.

The parameters for the optimization include, but are not limited to, an admittance matrix based on the branch impedance and bus fixed shunt admittance, and the flow capacity ratings, i.e., the maximal total power flow constrained by thermal ratings.

The topology of the network can be represented by a graph G of nodes (generators and connected loads) 30 connected by edges (transmission lines) 31.

### Input

Input to the method optimization includes the following:

1) A graph $G(N, E)$ with a set of $N$ nodes connected by a set of E edges $(i, j)$.

2) An admittance of the lines $Y_{ij} = g_{ij} + jb_{ij} \forall (i, j) \in E$, where g represents conductance of the line, b represents susceptance (imaginary part of the admittance) of the line with $\mathrm{j} = \sqrt{-1}$.

3) Constraints on active power $P_i^{G,\min}$, $P_i^{G,\max} i \in N$ that can be produced by the generators, and the reactive power $Q_i^{G,\min}$, $Q_i^{G,\max} \forall i \in N$ that can be produced by the generators.

4) Constraints $S_{ij}^{\max}$, $P_{ij}^{\max} \forall (i, j) \in E$ on apparent and active power transferred on the lines.

5) Limits $V_i^{\min}, V_i^{\max} \forall i \in N$ on voltage magnitudes at the buses.

6) Constraints $L_{ij}^{\max} \forall (i, j) \in E$ on thermal losses on the lines.

### Output

The optimization is performed at during time periods $t = 1,...,T$, where each time period has a duration $\Delta t$.

Output of the method includes complex valued voltages $V_i(t) \forall i \in N$ at the buses, active and reactive power levels $P_i^G(t), Q_i^G(t) \forall i \in N$ of the generators, and energy storage device state-of-charge levels $B_i(t) \forall i \in N$. Example devices include, but are not limited to batteries, transformers, capacitors, inductors, and step voltage regulators.

The global optimization uses a decision function $f(P^G, Q^G, V, B, R)$ that depends on active power generation variables $P^G = (P^G(1),...,P^G(T))$, $P^G(t) = (P_1^G(t),...,P_{|N|}^G(t))$, reactive power generation variables $Q^G = (Q^G(1),...,Q^G(T))$, $Q^G(t) = (Q_1^G(t),...,Q_{|N|}^G(t))$, complex valued voltages $V = (V(1),...,V(T))$, $V(t) = (V_1(t),...,V_{|N|}(t))$, rate of charge of batteries $R = (R(1),...,R(T))$, $R(t) = (R_1(t),...,R_{|N|}(t))$ and battery state-of-charge levels $B = (B(1),...,B(T))$, $B(t) = (B_1(t),..., B_{|N|}(t))$ at the buses.

### Multi-period Optimal Power Flow

In the preferred embodiment, the form of the function $f$ is quadratic and strictly increasing:

$$f(P^G, Q^G, V, B, R) = \sum_{t=1}^{T} \sum_{i \in N} (c_{2i}(P_i^G(t))^2 + c_{1i} P_i^G(t) + c_{0i}),$$

where c indicates constants, with $c_{2i}, c_{1i} \geq 0 \forall i \in N$.

We use equality constraints, inequality constraints and bounds on the decision variables to model the limits of feasible operation of the network. We model the operation of the electrical network by the equality constraints

$$h_n(P^G(t), Q^G(t), V(t), B(t), R(t)) = 0 \forall n = 1,\ldots,Ne, t = 1,\ldots,T,$$

where *Ne* indicates the number of equality constraints.

We model the limits on power generation, limits on voltage magnitude at the buses, ramp limits on the power generation, limits on rate of charge of batteries, limit on state-of-charge of batteries, constraints on the power transferred on the lines and thermal losses ensuring feasible operation as inequality constraints

$$g_n(P^G(t), Q^G(t), V(t), B(t), R(t)) \le 0 \forall n = 1,\ldots,N_i, t = 1,\ldots,T,$$

where $N_i$ indicates the number of inequality constraints.

To determine the voltages at the buses and the powers produced by the generators, we solve the following optimization problem to global optimality:

$$\begin{aligned} \text{minimize} \quad & \sum_{t=1}^{T} f(P^G(t), Q^G(t), V(t), B(t), R(t)) \\ \text{subject to} \quad & h_n(P^G(t), Q^G(t), V(t), B(t), R(t)) = 0 \forall n = 1,\ldots,Ne, t = 1,\ldots,T \\ & g_n(P^G(t), Q^G(t), V(t), B(t), R(t)) \le 0 \forall n = 1,\ldots,Ni, t = 1,\ldots,T \end{aligned} \quad ,(1)$$

where $\mathrm{Re}(V_i)$, $\mathrm{Im}(V_i)$ denote the real and imaginary parts of the complex voltage $V_i$, respectively, and $h_n$ represents equality constraints and $g_n$ represents inequality constraints.

**Multi-period Optimal Power Flow - Constraints**

In the preferred embodiment, the equality constraints

$$h_n(P^G(t), Q^G(t), V(t), B(t), R(t)) = 0 \forall n = 1,\ldots,Ne, t = 1,\ldots,T$$

are represented as

Power flows on the lines

$$\left.\begin{aligned} S_{ij} &= V_i\left(y_{ij}\left(V_i - V_j\right)\right)^* \\ S_{ji} &= V_j\left(y_{ij}\left(V_j - V_i\right)\right)^* \end{aligned}\right\} \forall (i,j) \in E$$

Power balances at the buses

$$\sum_{j \in N(i)} S_{ij} = S_i^G - S_i^D - R_i \ \forall i \in N$$

Battery dynamics

$$B_i(t+1) = B_i(t) + \eta R_i(t)\Delta t \ \forall i \in N$$

$$B_i(0) = B_i^0$$

where $S_{ij}(t) = P_{ij}(t) + jQ_{ij}(t)$ denotes the complex valued power transferred from bus *i* to bus *j* at time instant *t*, $S_{ji}(t) = P_{ji}(t) + jQ_{ji}(t)$ denotes the complex valued power transferred from bus *j* to bus *i* at time instant *t*, $(V_i(t))^*$ denotes the complex conjugate of the complex valued variable, $S_i^G(t) = P_i^G(t) + jQ_i^G(t)$ denotes the complex valued power produced by the generators at time instant *t*, $S_i^D(t) = P_i^D(t) + jQ_i^D(t)$ denotes the complex valued power demands, $R_i(t)$ is the active power used to charge the battery connected to bus *i* at time instant *t*, $B_i^0$ is the initial state-of-charge of the battery connected to bus *i*, $\eta$ is the storage efficiency of the battery. The duration of the time period is $\Delta t$. The variables representing power flow on the lines are used for convenience.

In the preferred embodiment for time period *t=1*, ..., *T*, the inequality constraints

$$g_n(P^G(t), Q^G(t), V(t), B(t), R(t)) = 0 \forall n = 1,\ldots,Ni, t = 1,\ldots,T$$

are represented as follows,

Limit on apparent power transferred on lines

$$\left.\begin{array}{l} \left|S_{ij}(t)\right| \le S_{ij}^{\max} \\ \left|S_{ji}(t)\right| \le S_{ij}^{\max} \end{array}\right\} \forall (i, j) \in E \quad ,$$

Limit on active power transferred on lines

$$\left.\begin{array}{l} \operatorname{Re}\left(S_{ij}(t)\right) \le P_{ij}^{\max} \\ \operatorname{Re}\left(S_{ji}(t)\right) \le P_{ij}^{\max} \end{array}\right\} \forall (i, j) \in E$$

Limit on thermal loss on lines

$$\operatorname{Re}\left(S_{ij}(t) + S_{ji}(t)\right) \le L_{ij}^{\max} \quad \forall (i, j) \in E$$

Limit of Power Generation

$$P_i^{G,\min} \le P_i^G(t) \le P_i^{G,\max}, Q_i^{G,\min} \le Q_i^G(t) \le Q_i^{G,\max} \ \forall i \in N$$

Limit on Voltage Magnitude

$$V_i^{\min} \le \sqrt{\operatorname{Re}(V_i(t))^2 + \operatorname{Im}(V_i(t))^2} \le V_i^{\max} \ \forall i \in N$$

Limit on State - of - Charge of Batteries

$$B_i^{\min} \leq B_i(t) \leq B_i^{\max} \ \forall i \in N$$

Limit on rate of charge or discharge of Batteries

$$R_i^{\min} \leq R_i(t) \leq R_i^{\max} \ \forall i \in N$$

and for time periods $t$ = 1,..., $T$ - 1.
Ramp Limit on Generator Power Generation

$$\Delta P_i^{\min} \leq P_i^G(t+1) - P_i^G(t) \leq \Delta P_i^{\max} \forall i \in N$$

$$\Delta Q_i^{\min} \leq Q_i^G(t+1) - Q_i^G(t) \leq \Delta Q_i^{\max} \forall i \in N$$

**Branch and Bound**

As shown in Fig. 2, we use a branch and bound (BB) procedure to search a spatial BB tree 200. The tree includes a root node R, and after partitioning, child nodes R1 and R2. The tree is used to determine the global minimum for the OPF by constructing a convex relaxation of the *feasible region* R associated with the OPF (1), that is easy to solve and provides a lower bound ($L$) on the optimal objective function value.
As shown in Fig. 3, the upper bound ($U$) can be determined by using local minimization, which also yields a feasible solution. The steps used by the method are described with reference to Fig. 7 below.
The BB updates the lowest upper bound ($U^{best}$), if $U < U^{best}$. The BB updates the lowest lower bound ($L^{best}$) based on the nodes in the tree that are to be analyzed and lower bound obtained for the current node ($L$). For nodes in BB tree that have not been solved, an estimate of the lower bound is used. This is typically the lower bound value of the parent node from which it was derived. If ($U^{best}$-$L^{best}$), or optionally ($U^{bes}$-$L^{best}$)/$U^{best}$, is less than some predetermined threshold $\tau$, then the BB procedure terminates with the current upper bounding solution.
Otherwise, if ($U$-$L$), or ($U$-$L$)/$U$ or ($U^{best}$-$L$) is less than some predetermined threshold $\tau$, then the current node is deleted from the BB tree and another node from the BB tree is selected to update/improve the lower and upper bound using the solving steps.
Otherwise as shown in Fig. 4, the feasible region R is partitioned into R1 and R2, and the BB procedure is repeated, and so forth. In other words, if there is an optimality gap, then the feasible region is partitioned into two sub-regions, over which the BB procedure is repeated. Nodes are deleted (in branch and bound terms "fathomed" **X**) when the lower bound $L$ is greater than the current best upper bound, see Fig. 2.
The BB procedure terminates when all nodes have been processed. In that case, the best upper bounding solution is returned as the globally optimal solution. As shown in Fig. 5, the partitioning of the feasible region can be accomplished by rectangular bisection on $\mathrm{P}^G{}_i$ or $Q^G{}_i$ which in the stated problem correspond to a particular time-instant $t$.

Fig. 6 shows a radial bisection on the voltage magnitudes $(e^2{}_i + f^2{}_i)^{0.5}$ which in the stated problem correspond to a particular time-instant $t$.
The example optimization described herein is a minimization. However, it should be understood, the problem can also be posed as a maximization by reversing the sign of the objective function.

**Semidefinite Program based Lower Bound for Multi-period Optimal Power Flow**

The lower bound for OPF (1) is obtained by solving a semidefinite (SDP) relaxation of the OPF. The SDP that is solved is given by:

$$\begin{aligned}
&\text{minimize} && F(P^G, Q^G, W, B, R) \\
&\text{subject to} && H_n(P^G(t), Q^G(t), W(t), B(t), R(t)) = 0 \forall n = 1,\ldots, Ne, t = 1,\ldots, T \\
& && G_n(P^G(t), Q^G(t), W(t), B(t), R(t)) \le 0 \forall n = 1,\ldots, Ni, t = 1,\ldots, T \\
& && (V_i^{\min})^2 \le Tr(M_i W(t)) \le (V_i^{\max})^2 \forall i \in N \\
& && W(t) \succ= 0, W(t) \text{ is } 2|N| \times 2|N| \text{ symmetric matrix} \\
& && B_i(t+1) = B_i(t) + \eta R_i(t)\Delta t \ \forall\, i \in N \\
& && \Delta P_i^{\min} \le P_i^G(t+1) - P_i^G(t) \le \Delta P_i^{\max} \forall i \in N \\
& && \Delta Q_i^{\min} \le Q_i^G(t+1) - Q_i^G(t) \le \Delta Q_i^{\max} \forall i \in N
\end{aligned} \quad ,(2)$$

where $W(t) \succ= 0$ denotes that matrix $W(t)$ must be positive semidefinite, the matrix operator $Tr()$ is defined as

$$Tr(AB) = \sum_{n=1}^{|N|} \sum_{m=1}^{|N|} A_{n,m} B_{m,n}$$

and the matrix $M_i$ is defined as

$$M_i = \begin{bmatrix} \zeta_i \zeta_i^T & 0 \\ 0 & \zeta_i \zeta_i^T \end{bmatrix},$$

where $\zeta_i$ denotes a vector of size $|N|$ with a 1 at the $i$ - th component and zero elsewhere.

The matrix $W(t)$ is a relaxation of the outer vector product of the voltage variable vector,

$$\begin{bmatrix} \mathrm{Re}(V(t)) \\ \mathrm{Im}(V(t)) \end{bmatrix} \begin{bmatrix} \mathrm{Re}(V(t)) & \mathrm{Im}(V(t)) \end{bmatrix}.$$

In the preferred embodiment, the objective function is,

$$F(P^G, Q^G, V, B, R) = \sum_{t=1}^{T} \sum_{i \in N} (c_{2i}(P_i^G(t))^2 + c_{1i} P_i^G(t) + c_{0i}).$$

The equality constraints in the semidefinite relaxation (Eq. 2) are written as,

$$\left.\begin{aligned}
P_{ij}(t) &= Tr(Y_{ij} W(t)) \\
Q_{ij}(t) &= Tr(\overline{Y}_{ij} W(t)) \\
P_{ji}(t) &= Tr(Y_{ji} W(t)) \\
Q_{ji}(t) &= Tr(\overline{Y}_{ji} W(t))
\end{aligned}\right\} \forall (i,j) \in E$$

$$P_i^G(t) - P_i^D(t) - R_i(t) = Tr(Y_i W(t)) \forall i \in N$$

$$Q_i^G(t) - Q_i^D(t) = Tr(\overline{Y}_i W(t)) \forall i \in N$$ ,

where, the matrices $Y_{ij}, Y_{ji}, Y_i, \overline{Y}_i$ are defined as shown in Fig. 8.

**Lagrangian Decomposition based Lower Bound for the Multi-period Optimal Power Flow**

The SDP relaxations of the Multi-period Optimal Power Flow problem tend to be large scale problems. Therefore, decomposition methods are necessary to solve the problems effectively. The Lagrangian decomposition is used for the Multi-period Optimal Power Flow problem by dualizing only the time coupled constraints in equation (2). The constraints are the dynamics equation for the batteries and the ramp limits for the generator's power generation. The dual problem is,

$$\begin{aligned} L^{LD}(\tau, \underline{\rho}, \overline{\rho}, \underline{\sigma}, \overline{\sigma}) = \min_{P^G, Q^G, W, B} \quad & L(P^G, Q^G, W, B, \tau, \underline{\rho}, \overline{\rho}, \underline{\sigma}, \overline{\sigma}) \\ \text{subject to} \quad & \text{Constraints in (2) other than battery dynamics} \\ & \text{and ramp limts for generators} \\ & (\underline{\rho}(t), \overline{\rho}(t), \underline{\sigma}(t), \overline{\sigma}(t)) \geq 0 \ \forall t = 1, \ldots, T\text{-}1 \\ & \tau(t) \text{ unrestricted } \forall t = 1, \ldots, T \end{aligned} \quad . (3)$$

where, $\tau_i(t)$ is the multiplier for the battery dynamics equation in equation (2), and

$$\tau(t) = (\tau_1(t), \ldots, \tau_{|N|}(t)), \tau = (\tau(1), \ldots, \tau(T))$$ , $\underline{\rho}_i(t), \overline{\rho}_i(t)$

are the multipliers for the active power ramp lower and upper limits for generators in equation (2) and

$$\underline{\rho}(t) = (\underline{\rho}_1(t), \ldots, \underline{\rho}_{|N|}(t)), \underline{\rho} = (\underline{\rho}(1), \ldots, \underline{\rho}(T))$$ ,

and $\underline{\sigma}_i(t)$, $\overline{\sigma}_i(t)$ are the multipliers for the reactive power ramp lower and upper limits for generators in equation (2),

$$\underline{\sigma}(t) = (\underline{\sigma}_1(t), \ldots, \underline{\sigma}_{|N|}(t)), \underline{\sigma} = (\underline{\sigma}(1), \ldots, \underline{\sigma}(T))$$ ,

$$\overline{\sigma}(t) = (\overline{\sigma}_1(t), \ldots, \overline{\sigma}_{|N|}(t)), \overline{\sigma} = (\overline{\sigma}(1), \ldots, \overline{\sigma}(T))$$

and the objective function is defined as

$$L({}^{P}G, Q^{G}, W, B, \tau, \underline{\rho}, \overline{\rho}, \underline{\sigma}, \overline{\sigma}) = \sum_{t=1}^{T} \sum_{i \in N} \begin{pmatrix} c_{2i}(P_i^G(t))^2 + c_{1i}P_i^G(t) + c_{0i} + \\ \tau_i(t)(B_i(t+1) - B_i(t) - \eta R_i(t)\Delta t) \end{pmatrix}$$

$$+ \sum_{t=1}^{T-1} \sum_{i \in N} \begin{pmatrix} \underline{\rho}_i(t)(\Delta P_i^{\min} - P_i^G(t+1) + P_i^G(t)) + \\ \overline{\rho}_i(t)(P_i^G(t+1) - P_i^G(t) - \Delta P_i^{\max}) + \\ \underline{\sigma}_i(t)(\Delta Q_i^{\min} - Q_i^G(t+1) + Q_i^G(t)) + \\ \overline{\sigma}_i(t)(Q_i^G(t+1) - Q_i^G(t) - \Delta Q_i^{\max}) \end{pmatrix}.$$

The above objective function and the constraints in equation (3), which is partial Lagrangian, is decoupled by time. Thus, instead of solving a single large problem in equation (2), we decouple the optimization problem into T smaller SDPs. To obtain the best possible value of the partial Lagrangian dual function, the following optimization problem is solved,

$$\begin{array}{ll} \max & L^{LD}(\xi) \\ \text{subject to} & \xi_{in} \geq 0, \xi_{eq} \text{ free} \end{array}, \quad (4)$$

where $\xi_{eq} = \tau$, $\xi_{in} = (\underline{\rho}, \overline{\rho}, \underline{\sigma}, \overline{\sigma})$. This is a non-smooth concave maximization problem, which can be solved using a projected subgradient method. At each iteration of the subgradient method T smaller SDP's are solved and the multipliers $\xi$ are updated using a simple projected subgradient update. However, the subgradient method does not guarantee ascent, and it can take a large number of iterations before the optimal multipliers are found. Hence, the method is usually terminated after a predetermined number of iterations. The optimal value of equation (4) provides the lower bound *L* in the method.

The maximization problem which iterates on $\xi$ is solved using a subgradient procedure as,

$$\xi_{eq}^{k+1} = \xi_{eq}^{k} + s^k g_{eq}^{k}, \xi_{in}^{k+1} = \left[\xi_{in}^{k} + s^k g_{in}^{k}\right]^+$$

where $[]^+$ denotes the projection on to the nonnegative orthant.

$s^k$ is a step size.

$g_{eq}^{k}$ denotes the residual of equality constraints that are dualized.

$g_{in}^{k}$ denotes the residual of inequality constraints that are dualized.

The maximization problem can also be solved using a bundle method or any other nonsmooth optimization procedure. When the lower and upper bounds for power generation variables and voltage magnitudes are updated as described below, the appropriate values are used in the subproblems (i), (ii) and (iii) described above.

Fig. 7 shows the steps of our method for a method for globally optimizing a power flow in electric power networks during multiple time periods of operation. We begin by initializing 710 variables and constraints 715 on the BB tree 200.

Using the variables and constraints, we solve 720 upper and lower bounds 725 of the OPF, and update 730 the lowest upper and lower bounds 735. If a difference 740 of the lowest bounds is less than a threshold $\tau$, then we output the power *P* and voltage *V* 750. Otherwise, we partition 760 or delete the corresponding node in the BB tree, and repeat iterate at step 720.

In summary, the invented power flow optimization has the following advantages over the prior art. We consider the coupling between optimization problems that exist over time, particularly when using storage devices such as batteries. We consider the coupling between problems that arise in successive time instants, particularly when switching equipment such as step voltage regulators, voltage transformers or capacitor banks are used. We also consider the coupling between problems that arise in successive time instants, particularly when power drawn from generating equipment are subject to ramp limits.

## Claims

1. A method for optimizing a power flow in an electric power network by solving an optimization problem represented by an objective function, the electric power network including buses (10), the buses (10) being locally connected to loads (12), generators (14), and storage devices (15) and being interconnected by transmission lines (20), the method comprising optimizing the power flow of the electric power network by performing the steps of:

   initializing (710) variables (715) and constraints of a branch and bound (BB) tree, wherein nodes in the BB tree represent feasible regions of the optimization problem;
   solving (720) for upper and lower bounds (725) on the objective function using the BB tree;
   updating (730) a lowest lower bound (735) and a lowest upper bound (735);
   determining (740) if a difference between the lowest lower bound (735) and the lowest upper bound (735) is less than a threshold; and
   outputting (750) the power flow based on the lowest lower bound (735) and the lowest upper bound (735) if true, and otherwise iterating (760) beginning at the solving step (720) until a termination condition is reached,
   wherein the steps are performed in a processor over multiple time periods that are coupled during operation of the electric power network,
   wherein the multiple time periods of operation of the electric network are due to limits on power generation, limits on voltage magnitude at buses (10), ramp limits on the power generation, limits on rate of charge of batteries, limits on state-of-charge of batteries, constraints on the power transferred on the lines, and thermal losses or due to step voltage regulators, capacitor banks, and limits on frequent change in settings between subsequent time steps,
   and wherein an output of the method includes complex valued voltages at the buses (10), active and reactive power levels of the generators (14), and state-of-charge levels of the energy storage devices (15) .

2. The method of claim 1, wherein the lower bounds (725) are determined by semi-definite programming to provide lowest lower bound (735).

3. The method of claim 1, wherein the solving (720) uses a Lagrangian decomposition method.

4. The method of claim 1, wherein the parameters for the optimizing include an admittance matrix based on a branch impedance and a bus fixed shunt admittance, and flow capacity ratings.

5. The method of claim 1, wherein the optimizing uses a decision function that depends on active power generation variables, reactive power generation variables, complex valued voltages, rate of charge of batteries, and battery state-of-charge levels at buses (10) .

6. The method of claim 5, wherein the decision function is quadratic and strictly increasing.

7. The method of claim 1, wherein equality constraints, inequality constraints and bounds on decision variables are used to model limits of feasible operation of the network.

8. The method of claim 1, further comprising:
   modeling limits on power generation, limits on voltage magnitude at buses, ramp limits on power generation, limits on rate of charge of batteries, limit on state-of-charge of batteries, constraints on power transferred on lines.

9. The method of claim 1, wherein the upper bounds (725) are determined by local minimization.

10. The method of claim 1, wherein the feasible regions are partitioned by rectangular bisection during the iterating.

11. The method of claim 1, wherein the feasible regions are partitioned by radial bisection during the iterating.

12. The method of claim 1, wherein the electric power network includes energy storage devices (15), and the multiple time periods are coupled to accommodate charging and discharging of the energy storage devices (15) at any particular time.

**Patentansprüche**

1. Verfahren zum Optimieren eines Energieflusses in einem elektrischen Stromnetz durch Lösen einen Optimierungsproblems, das durch eine Zielfunktion repräsentiert ist, wobei das elektrische Stromnetz Busse (10) umfasst, wobei die Busse (10) mit Lasten (12), Generatoren (14) und Speichereinrichtungen (15) lokal verbunden sind und durch Übertragungsleitungen (20) miteinander verbunden sind, wobei das Verfahren Optimieren des Energieflusses des elektrischen Stromnetzes umfasst, durch Durchführen der Schritte:

   Initialisieren (710) von Variablen (715) und Beschränkungen eines Verzweigung-und-Schranke-(BB=Branch-and-Bound)-Baums, wobei Knoten im BB-Baum zulässige Bereiche des Optimierungsproblems repräsentieren;
   Lösen (720) für obere und untere Schranken (725) für die Zielfunktion unter Verwendung des BB-Baums;
   Aktualisieren (730) einer niedrigsten unteren Schranke (735) und einer niedrigsten oberen Schranke (735);
   Bestimmen (740), ob eine Differenz zwischen der niedrigsten unteren Schranke (735) und der niedrigsten oberen Schranke (735) kleiner ist als ein Schwellenwert; und
   Ausgeben (750) des Energieflusses auf Grundlage der niedrigsten unteren Schranke (735) und der niedrigsten oberen Schranke (735) falls wahr, und ansonsten Widerholen (760), beginnend beim Lösungsschritt (720), bis eine Endbedingung erreicht ist, wobei die Schritte in einem Prozessor über mehrere Zeiträume durchgeführt werden, die während des Betriebs des elektrischen Stromnetzes gekoppelt sind, wobei die mehreren Zeiträume des Betriebs des elektrischen Netzes bedingt sind durch Begrenzungen für Energieerzeugung, Begrenzungen für Spannungshöhe an Bussen (10), Anstiegsbegrenzungen für die Energieerzeugung, Begrenzungen für Laderate von Batterien, Begrenzungen für Ladungszustand von Batterien, Einschränkungen für die auf den Leitungen übertragene Leistung, und thermische Verluste, oder bedingt sind durch Schrittspannungsregler, Kondensatorbänke, und Begrenzungen für häufige Einstellungsänderungen zwischen aufeinanderfolgenden Zeitschritten,
   und wobei eine Ausgabe des Verfahrens komplexwertige Spannungen an den Bussen (10), aktive und reaktive Leistungsniveaus der Generatoren (14) und Ladungszustandsniveaus der Energiespeichereinrichtungen (15) umfasst.

2. Verfahren nach Anspruch 1, wobei die unteren Schranken (725) durch semidefinite Programmierung bestimmt sind, um die niedrigste untere Schranke (735) bereitzustellen.

3. Verfahren nach Anspruch 1, wobei das Lösen (720) das Lagrange-Zerlegungsverfahren einsetzt.

4. Verfahren nach Anspruch 1, wobei die Parameter für das Optimieren eine Admittanzmatrix basierend auf einer Zweigimpedanz und einer Bus-festgelegten Queradmittanz, und Flusskapazitätsgüte umfassen.

5. Verfahren nach Anspruch 1, wobei die Optimierung eine Entscheidungsfunktion verwendet, die von aktiven Energieerzeugungsvariablen, reaktiven Energieerzeugungsvariablen, komplexwertigen Spannungen, Laderate von Batterien und Batterieladezustandsniveaus an Bussen (10) abhängig ist.

6. Verfahren nach Anspruch 5, wobei die Entscheidungsfunktion quadratisch und streng monoton steigend ist.

7. Verfahren nach Anspruch 1, wobei Gleichheitsbeschränkungen, Ungleichheitsbeschränkungen und Schranken für Entscheidungsvariablen verwendet werden, um Begrenzungen für zulässigen Betrieb des Netzes zu modellieren.

8. Verfahren nach Anspruch 1, ferner umfassend:
   Modellieren von Begrenzungen für Energieerzeugung, Begrenzungen für Spannungsgröße an Bussen, Rampenbegrenzungen für Energieerzeugung, Begrenzungen für Laderate von Batterien, Begrenzungen für Ladezustand von Batterien, Beschränkungen für auf Leitungen übertragene Leistung.

9. Verfahren nach Anspruch 1, wobei die oberen Schranken (725) durch lokale Minimierung bestimmt werden.

10. Verfahren nach Anspruch 1, wobei die zulässigen Bereiche durch rechtwinklige Zweiteilung während der Wiederholung geteilt werden.

11. Verfahren nach Anspruch 1, wobei die zulässigen Bereiche durch radiale Zweiteilung während der Wiederholung geteilt werden.

**12.** Verfahren nach Anspruch 1, wobei das elektrische Stromnetz Energiespeichereinrichtungen (15) umfasst, und die mehreren Zeiträume gekoppelt sind, um Laden und Entladen der Energiespeichereinrichtungen (15) zu jeder Zeit zu ermöglichen.

## Revendications

**1.** Procédé destiné à optimiser un flux de puissance dans un réseau d'énergie électrique en résolvant un problème d'optimisation représenté par une fonction objectif, le réseau d'énergie électrique comprenant des bus (10), les bus (10) étant connectés de manière locale à des charges (12), à des générateurs (14), et à des dispositifs de stockage (15), et étant interconnectés par des lignes de transmission (20), le procédé comprenant l'optimisation du flux de puissance du réseau d'énergie électrique en exécutant les étapes consistant à :

initialiser (710) des variables (715) et des contraintes d'un arbre de graphes binaires (ou BB, acronyme de « branch and bound »), dans lequel les noeuds de l'arbre BB représentent des régions de faisabilité du problème d'optimisation ;
résoudre (720) les limites supérieures et inférieures (725) de la fonction objectif en utilisant l'arbre BB ;
mettre à jour (730) la limite inférieure la plus basse (735) et la limite supérieure la plus basse (735) ;
déterminer (740) si la différence entre la limite inférieure la plus basse (735) et la limite supérieure la plus basse (735) est inférieure à un seuil ; et
délivrer en sortie (750) le flux de puissance sur la base de la limite inférieure la plus basse (735) et de la limite supérieure la plus basse (735) en cas de réponse positive, et sinon réitérer (760) depuis le début de l'étape de résolution (720) jusqu'à ce qu'une condition de fin soit atteinte, dans lequel les étapes sont exécutées dans un processeur sur de multiples périodes de temps qui sont couplées lors du fonctionnement du réseau d'alimentation électrique ;
dans lequel les multiples périodes de temps de fonctionnement du réseau d'alimentation électrique sont dues à des limites de production d'électricité, à des limites de grandeur de tension au niveau des bus (10), à des limites de rampe de production d'électricité, à des limites de taux de charges de batteries, à des limites d'état de charge de batteries, à des contraintes de puissance transférée sur les lignes, et à des pertes thermiques, ou sont dues à des régulateurs de tension progressifs, à des banques de condensateurs, et à des limites de modifications fréquentes des paramètres entre des étapes de temps ultérieures ;
et dans lequel une sortie du procédé comprend des tensions évaluées complexes au niveau des bus (10), des niveaux de puissance active et réactive des générateurs (14), et des niveaux d'état de charge des dispositifs de stockage de l'énergie (15).

**2.** Procédé selon la revendication 1, dans lequel les limites inférieures (725) sont déterminées par une programmation semi-définie de façon à fournir la limite inférieure la plus basse (735).

**3.** Procédé selon la revendication 1, dans lequel l'étape de résolution (720) utilise un procédé de décomposition de Lagrange.

**4.** Procédé selon la revendication 1, dans lequel les paramètres d'optimisation comprennent une matrice d'admittance basée sur une impédance de branche et sur une admittance de shunt fixée par bus, et des caractéristiques de capacité de flux.

**5.** Procédé selon la revendication 1, dans lequel l'optimisation utilise une fonction décision qui dépend de variables de production d'électricité active, de variables de production d'électricité réactive, de tensions évaluées complexes, du taux de charge des batteries, et des niveaux d'état de charge des batteries au niveau des bus (10).

**6.** Procédé selon la revendication 5, dans lequel la fonction décision est quadratique et strictement croissante.

**7.** Procédé selon la revendication 1, dans lequel des contraintes d'égalité, des contraintes d'inégalité et des limites des variables de décision, sont utilisées de façon à modéliser les limites d'une opération de faisabilité du réseau.

**8.** Procédé selon la revendication 1, comprenant en outre une étape consistant à :
modéliser les limites de production d'électricité, les limites de grandeur de tension au niveau des bus, les limites de rampe de production d'électricité, les limites de taux de charge des batteries, les limites de l'état de charge des batteries, les contraintes de la puissance transférée sur des lignes.

9. Procédé selon la revendication 1, dans lequel les limites supérieures (725) sont déterminées par une minimisation locale.

10. Procédé selon la revendication 1, dans lequel les régions de faisabilité sont partitionnées par une bissection rectangulaire au cours de l'itération.

11. Procédé selon la revendication 1, dans lequel les régions de faisabilité sont partitionnées par une bissection radiale au cours de l'itération.

12. Procédé selon la revendication 1, dans lequel le réseau d'alimentation électrique comprend des dispositifs de stockage de l'énergie (15), et de multiples périodes de temps sont couplées de façon à adapter la charge et la décharge des dispositifs de stockage de l'énergie (15) à n'importe quel instant particulier.

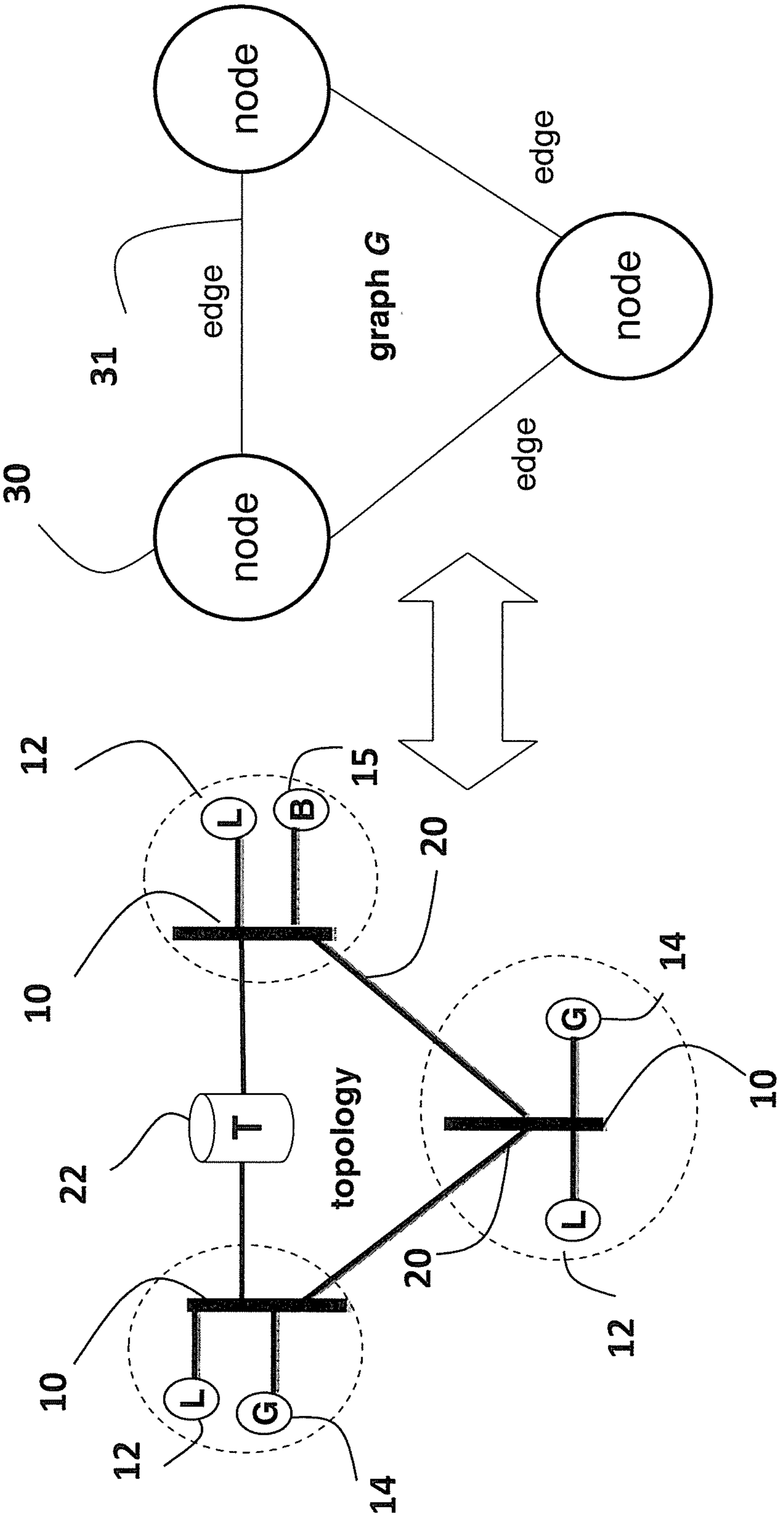
node
node
node
edge
edge
edge
graph G
30
31
topology
T
L
B
G
L
L
G
10
10
10
12
12
12
14
14
15
20
20
22

Fig. 1

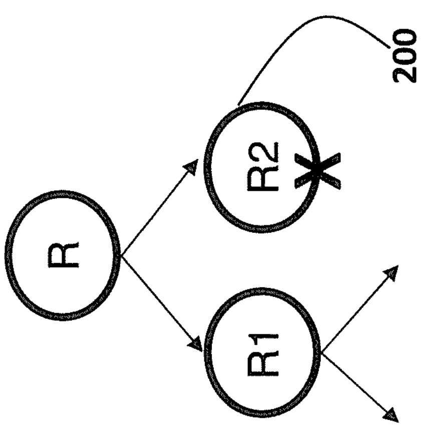


Fig. 2

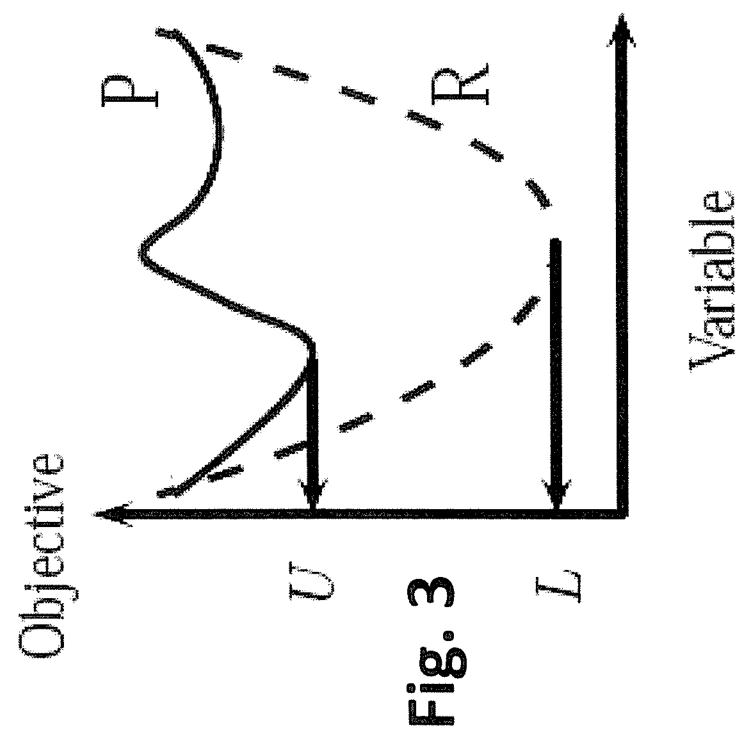


Fig. 3

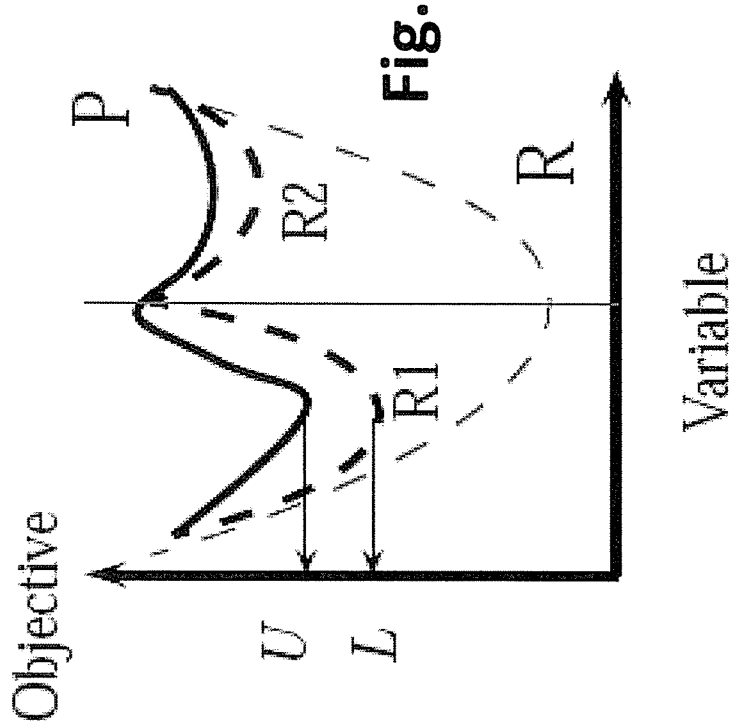


Fig. 4

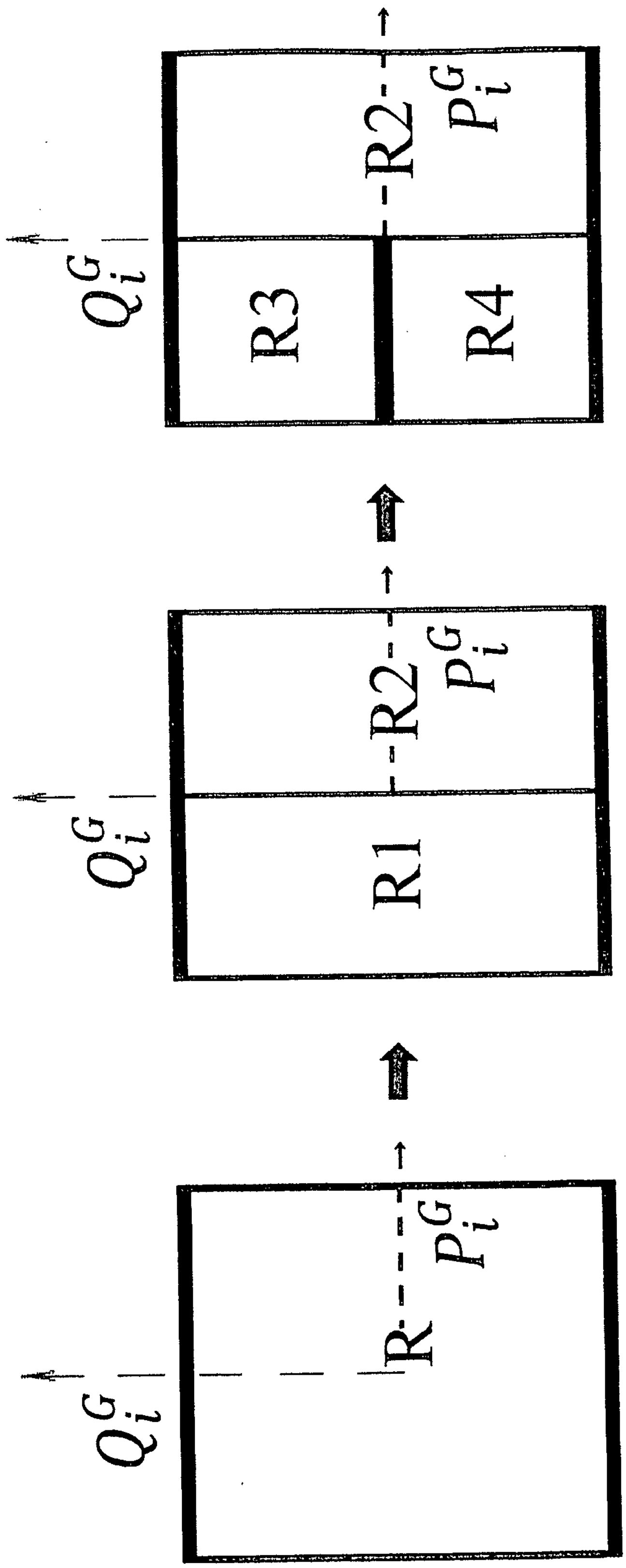


Fig. 5

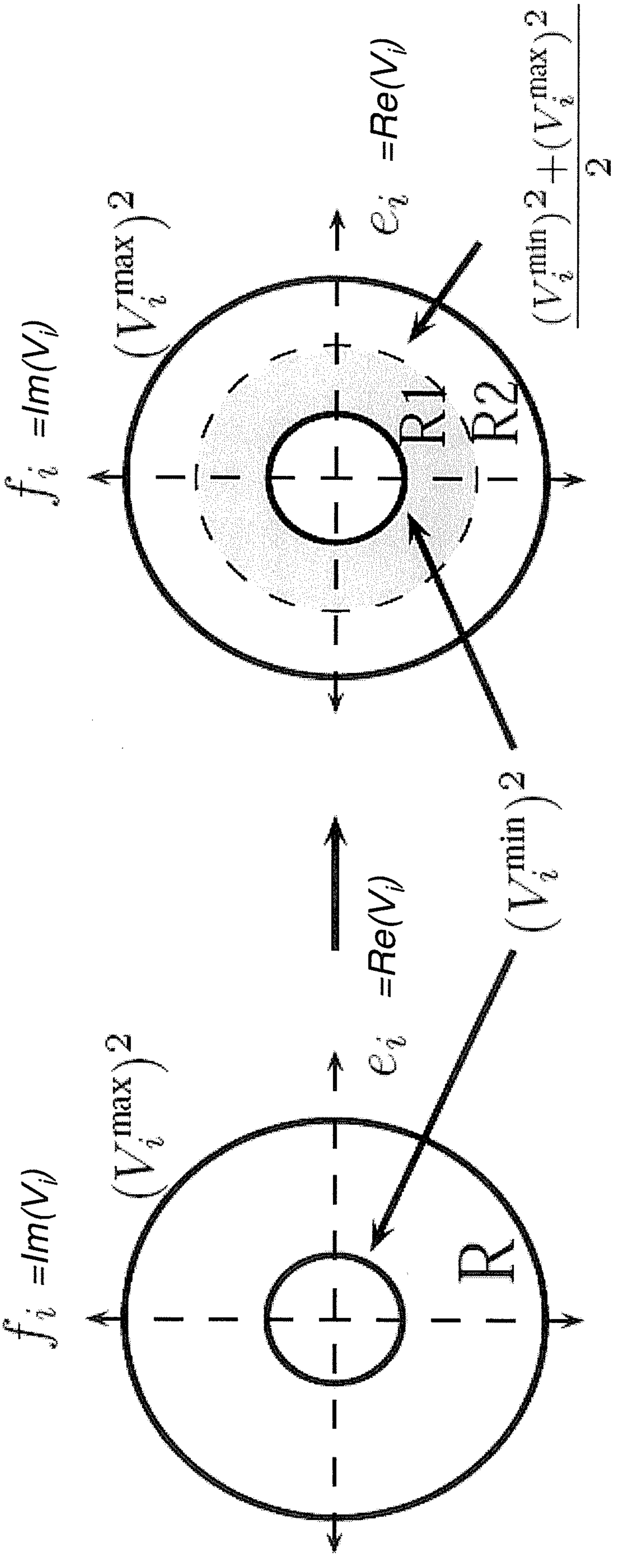
$f_i$ =Im($V_i$)
$e_i$ =Re($V_i$)
$\left(V_i^{\max}\right)^2$
$\left(V_i^{\min}\right)^2$
R
R1
R2
$\frac{\left(V_i^{\min}\right)^2+\left(V_i^{\max}\right)^2}{2}$

Fig. 6

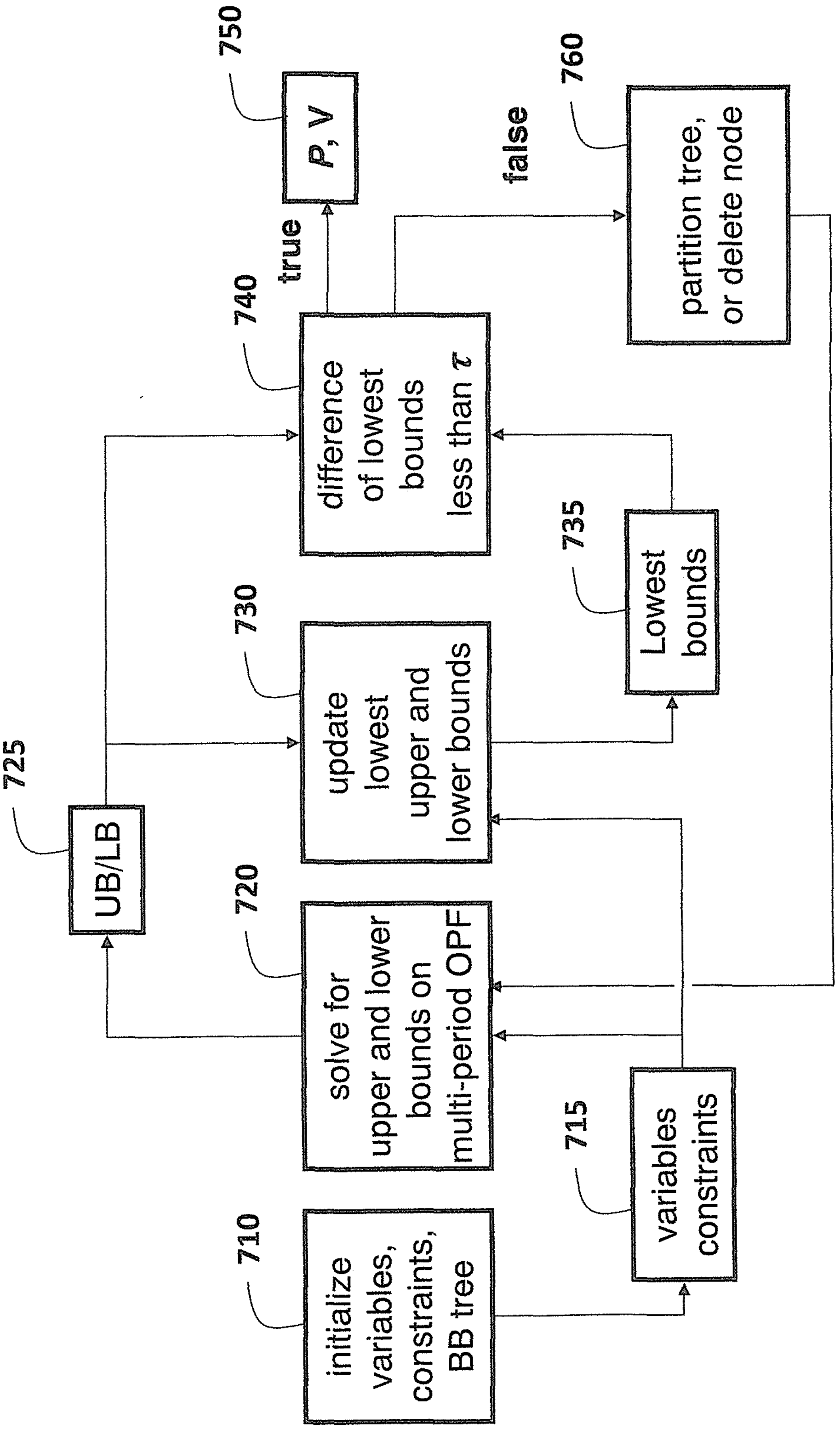
710
initialize variables, constraints, BB tree
715
variables constraints
720
solve for upper and lower bounds on multi-period OPF
725
UB/LB
730
update lowest upper and lower bounds
735
Lowest bounds
740
difference of lowest bounds less than τ
true
750
P, V
false
760
partition tree, or delete node

Fig. 7

$Y_{bus}$ is a $|N| \times |N|$ matrix with elements defined as

$$Y_{bus}(i,j) = \begin{cases} -y_{ij} \text{ if } (i,j) \in E \\ -y_{ji} \text{ if } (j,i) \in E \\ \sum_{(i,j)\in E} y_{ij} + \sum_{(j,i)\in E} y_{ji} \end{cases}$$

$$Y_{bus,i} = \zeta_i \zeta_i^T Y_{bus}; Y_{bus,ij} = y_{ij}\zeta_i\zeta_i^T - y_{ij}\zeta_i\zeta_j^T$$

$$Y_i = \frac{1}{2}\begin{bmatrix} \mathrm{Re}(Y_{bus,i} + Y_{bus,i}^T) & \mathrm{Im}(Y_{bus,i}^T - Y_{bus,i}) \\ \mathrm{Im}(Y_{bus,i}^T - Y_{bus,i}) & \mathrm{Re}(Y_{bus,i} + Y_{bus,i}^T) \end{bmatrix}; Y_i = -\frac{1}{2}\begin{bmatrix} \mathrm{Im}(Y_{bus,i} + Y_{bus,i}^T) & \mathrm{Re}(Y_{bus,i} - Y_{bus,i}^T) \\ \mathrm{Re}(Y_{bus,i} - Y_{bus,i}^T) & \mathrm{Im}(Y_{bus,i} + Y_{bus,i}^T) \end{bmatrix}$$

$$Y_{ij} = \frac{1}{2}\begin{bmatrix} \mathrm{Re}(Y_{bus,ij} + Y_{bus,ij}^T) & \mathrm{Im}(Y_{bus,ij}^T - Y_{bus,ij}) \\ \mathrm{Im}(Y_{bus,ij}^T - Y_{bus,ij}) & \mathrm{Re}(Y_{bus,ij} + Y_{bus,ij}^T) \end{bmatrix}; \bar{Y}_{ij} = -\frac{1}{2}\begin{bmatrix} \mathrm{Im}(Y_{bus,ij} + Y_{bus,ij}^T) & \mathrm{Re}(Y_{bus,ij} - Y_{bus,ij}^T) \\ \mathrm{Re}(Y_{bus,ij} - Y_{bus,ij}^T) & \mathrm{Im}(Y_{bus,ij} + Y_{bus,ij}^T) \end{bmatrix}$$

where $\zeta_i$ denotes a vector of size $|N|$ with a 1 at the $i$ - th component and zeros elsewhere.

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6625520 B


### Non-patent literature cited in the description


- **J. WARRINGTON et al.** *American Control Conference (ACC), 2012,* 27 June 2012